Europäisches Patentamt

European Patent Office

Office européen des brevets

(11) Publication number: **0 319 494**
**A1**

# EUROPEAN PATENT APPLICATION

(21) Application number: **88850316.6**

(22) Date of filing: **20.09.88**

(51) Int. Cl.⁴: **F 16 K 15/14**

(30) Priority: **13.10.87 SE 8703967**

(43) Date of publication of application:
**07.06.89 Bulletin 89/23**

(84) Designated Contracting States:
**CH DE FR GB IT LI NL**

(71) Applicant: **AB DURGO**
**P.O. Box 3021**
**S-171 03 Solna (SE)**

(72) Inventor: **Andersson, Lars**
**Hembergavägen 67**
**S-183 42 Täby (SE)**

(74) Representative: **Omming, Allan**
**A. OMMING & CO. AB, Patentbyra Sveavägen 28-30**
**S-111 34 Stockholm (SE)**

The title of the invention has been amended (Guidelines for Examination in the EPO, A-III, 7.3).

(54) Valve arrangement incorporating an air-delivery duct.

(57) The invention relates to a valve which is intended for connection between a water tap (1) and a hose (4), in order to enable the hose to empty automatically when turning-off the tap. The inventive valve is characterized in that the valve house (5, 6) includes a through-flow channel (7, 8) having a seat (13) from which at least one air-supply channel (14) extends to the outer surface of the housing. Arranged on the seat is an elastic, conical sealing annulus (15) which is flattened by the water pressure and held pressed against the seat and the channel orifice, and which in the absence of water pressure returns to its conical shape and uncovers the air-supply channel, thereby enabling air to flow into the hose so that water present therein can run out.

Fig.1

EP 0 319 494 A1

Bundesdruckerei Berlin

**Description**

**A valve arrangement incorporating an air-delivery duct and intended particularly for a water tap**

This invention relates to a valve arrangement which is intended to be fitted between a water tap or like water outlet and a garden or watering hose, in accordance with the preamble of Claim 1.

It is generally desirable, and as a rule a standard requirement that water remaining in garder hoses after use is unable to flow back into the water mains to the tap or like water outlet to which the hose is connected. Non-return valves or check valves are normally used for this purpose. These valves, however, do not solve problems created by residual, static water in garden hoses, since such water will, in time, become the breeding ground of bacteria cultures, which cannot be prevented from spreading from the stagnant hose water to the water mains, through the non-return valve or a turned-off tap.

Consequently, it is an object of the present invention in this context to provide a valve arrangement which will empty a hose of water automatically, or in all events at least empty that part of the hose located nearest the tap, immediately the tap has been turned-off and watering thus interrupted, thereby preventing bacteria-contaminated water from coming into contact with the water tap and spreading to the water mains.

This object is realized to the full with the inventive valve arrangement defined in the following Claims and described hereinafter with reference to the accompanying drawings, in which

Figure 1 illustrates an exemplifying embodiment of an inventive valve arrangement and shows the valve in its rest state, e.g. when no water passes through the hose;

Figure 2 illustrates the valve of Figure 1 in its working state;

Figure 3 illustrates the valve seat, seen in the direction of the arrows III-III in Figure 1;

Figure 4 illustrates the active valve member seen in the flow direction; and

Figure 5 is a side view of the active valve member.

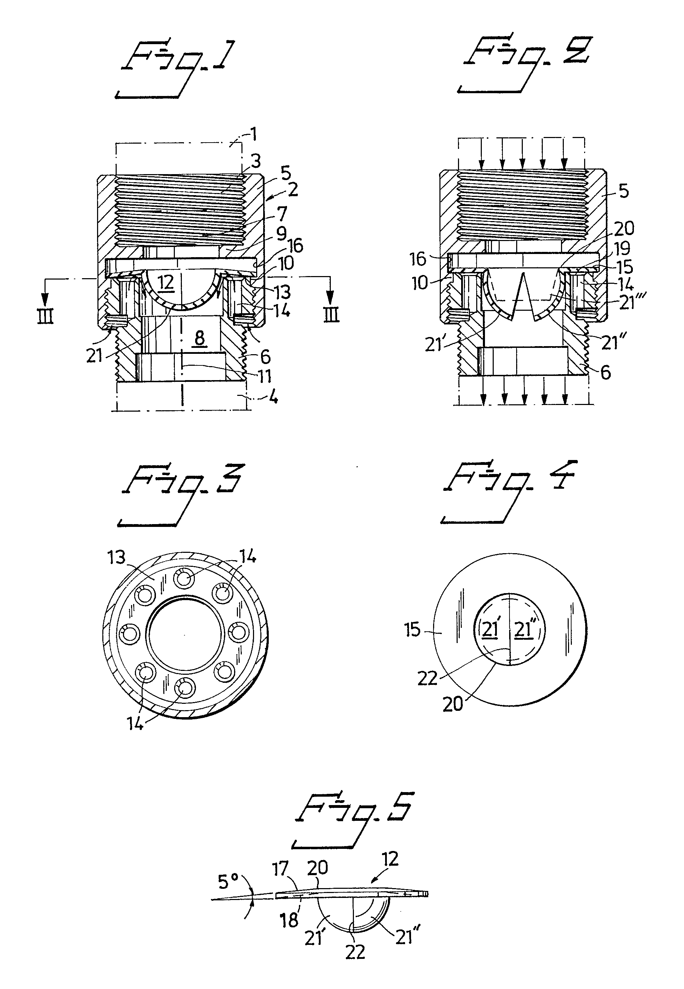

Figure 1 illustrates a water tap 1, or like water outlet, e.g. a closeable tap of any conventional kind whatsoever, which is connected to a pipe through which water is delivered under pressure. Screwed to the outlet section 3 of the tap 1 is a valve arrangement 2, this valve arrangement being constructed in accordance with the present invention. The valve outlet has connected thereto a hose 4, e.g. a rubber or plastic garden hose. The valve arrangement 2 may be connected to the tap 1 via a short pipe, and a short pipe may also be fitted between the hose 4 and the valve arrangement 2.

The valve embodiment illustrated in Figures 1 and 2 comprises a divided or two-part housing 5, 6, of which one part 5 is provided with a screw thread so that it can be screwed onto the tap 1. The outher housing part 6 is screwed into the housing part 5 to form a tight, or at least substantially tight assembly, e.g. a water-tight assembly. The housing parts 5 and 6 may be made of metal or a plastic material. The two housing parts 5 and 6 include mutually concentric passageways or channels 7 and 8 through which water is conducted through the valve. As shown in Figures 1 and 2, the channel part 7 of the housing part 5 remote from the tap 1 is provided with a radially and inwardly extending circular flange 9. This flange 9 can be omitted without altering the function of the valve, but is preferably used in order to prevent the active valve member, described hereinafter, from being held in position irrespective of the operating state of the valve arrangement 2. In the case of the illustrated exemplifying embodiment, a second circular flange 10, which lies in a plane perpendicular to the center axis 11 of the valve, forms an abutment or holding-up surface for an active valve member 12 mounted in the through-flow channel 7, 8.

The rim of the housing part 6 facing the housing part 5 is configured to form a circular seat 13 (see Figure 3), the active surface of which is flat and extends at right angles to the axis 11. Extending through the valve seat 13 and the valve material of the housing part 6 is at least one air-supply channel 14, through which air is able to flow freely into the valve channel 7, 8 when the active valve member occupies its valve-open position. As shown in Figure 3, the illustrated valve arrangement incorporates eight air-supply channels 14. When the valve is mounted so as to extend vertically, as envisaged with the Figure 1 illustration, a single air-supply channel 14 will suffice however.

In the case of the illustrated, exemplifying valve arrangement, the active valve member 12 comprises an annular plate 15, hereinafter referred to as the sealing annulus, the outer edge of which lies against the circular flange 10 and may optionally lie under tension against the inner cylindrical wall surface 16 of the housing part 5. When no load is supplied to the sealing annulus 15, which is made of an elastic material, such as rubber, the seal will have the form of a truncated cone having a cone angle of, e.g., 2-10° (see Figure 5) and with the cone apex facing the tap 1, e.g. pointing in the direction of the incoming water flow.

The sealing annulus 15 exhibits a top pressure surface 17 and a bottom sealing surface 18. The sealing annulus is preferably of uniform thickness and has a radial extension such that when underload and occupying the position illustrated in Figure 2, the annulus will lie against the seat 13 and cover the orifices 19 of the air-supply channels 14 (Figure 2) formed in the seat 13.

In the case of the illustrated embodiment, the inner circular edge 20 of the sealing annulus 15 merges with a substantially hemispherical pressure take-up device 21, which is divided into at least two sections of mutually equal size 21' and 21" along a central sectional line 22. The device 21 is made of the same material as the sealing annulus 15.

Figure 1 illustrates the state of the valve arrangement 2 when no load is applied thereon, i.e. the state of the valve when the tap 1 is turned off and no water flows through the channel 7, 8. When the valve is in this state, the sealing annulus 15 will adopt is conical configuration, so as to leave a free annular gap between the valve seat 13 and the bottom sealing surface 18 of said annulus. The orifices 19 are thus uncovered and air can be sucked through the orifices and air-supply channels 14 associated therewith and past the hemispherical device 21, the diameter of which is smaller than the diameter of the channel or passage 8. This means that water present in the hose 4, the distal end of which is assumed to be closed, can run out and at least the water in the hose located nearest the valve 2 will be removed. The tap will normally be located about one meter above the ground and if the hose lies on the ground the hose will be emptied completely.

When the hose is to be used for watering purposes and the tap valve (not shown) is opened, the pressurized water leaving the tap will press down the sealing annulus of the inventive arrangement 2 against the valve seat 13 and therewith block the orifices 19, this downward pressure being supported by the force on the hemispherical device 21, which draws down the edge 20 on the sealing annulus 15 and, at the same time, opens so as to allow water to flow freely to the hose 4. This loaded state of the valve is illustrated in Figure 2. The pressure take-up device 21 forms a simple check valve in the unloaded state of the valve 2. It is emphasized that the pressure take-up device 21 is not necessarily required to urge the sealing annulus into sealing abutment with the seat 13, and that if desiring to amplify the pressure force said device can be given any suitable configuration which will enable it to draw down the inner edge of the sealing annulus under the influence of the water pressure or water flow, such that the sealing surface 18 will come into abutment with the seat 13.

Although the outer edge of the sealing annulus is shown to lie against a circular flange 10, it will be obvious that the edge of said annulus can be arranged to lie directly against the seat 13. It has been mentioned in the aforegoing that the illustrated device 21, when the presence of such a device is desired, can be replaced with any other suitable means whatsoever which, when water passes through the valve, will assist in pressing the sealing annulus 15 against the valve seat. One such alternative device 21''' is indicated in broken lines in Figure 2 and comprises a funnel-shaped device which is open at both ends and the upper edge of which is connected to the inner edge 20 of the sealing annulus 15.

## Claims

1. A valve (2) intended for connection between a water tap or like water outlet (1) and a watering hose (4), said valve comprising a housing (5, 6) which can be connected between the water tap and the hose and which incorporates a through-flow channel (7, 8) for conducting pressurized water from the tap to the hose, and which further comprises a seat (13) which embraces the through-flow channel in the entering of the housing and which has a sealing surface facing towards the tap (1) and at least one air-supply channel (14) which extends between an orifice (19) provided in the sealing surface of the valve seat (13) and the outer surface of the housing (5, 6), characterized in that co-acting with the seat (13) is an elastic sealing annulus (15) which has a conical configuration in the absence of water pressure thereon and which is intended to be flattened by the pressure of water flowing through the through-flow channel (7, 8) so as to be pressed against the sealing surface of the seat (13) and against the orifice (19) of the air-supply channel (14) and to uncover said orifice (19) in the absence of water pressure.

2. A valve according to Claim 1, characterized in that the sealing annulus exhibits a cone angle of 2-10°.

3. A valve according to Claim 1 or 2, characterized in that the radially inward edge (20) of the sealing annulus (15) facing the through-flow channel (7, 8) has connected thereto a device (21, 22''') which is activated by said water pressure or said water flow and which is intended to exert a pulling force on said edge when pressurized water flows through said valve.

4. A valve according to Claim 3, characterized in that the inner edge of said sealing annulus (15) is connected to a hemispherical pulling device (21) which is divided in two parts along a diameter at right angles to the seat (13) and the diameter of which is smaller than the diameter of the through-flow channel.

5. A valve according to any of Claims 1-4, characterized in that the valve includes a plurality of air-supply channels (14).

Fig. 1

Fig. 2

Fig. 3

Fig. 4

Fig. 5

| | DOCUMENTS CONSIDERED TO BE RELEVANT | | EP 88850316.6 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | US - A - 2 292 373 (GROENINGER)<br>* Totality *<br>-- | 1,4,5 | F 16 K 15/14 |
| A | US - A - 3 556 122 (LAERDAL)<br>* Totality *<br>---- | 1,4,5 | |
| | | | **TECHNICAL FIELDS SEARCHED (Int. Cl.4)**<br><br>F 16 K 15/00<br>A 61 M 5/00 |

The present search report has been drawn up for all claims

| Place of search | Date of completion of the search | Examiner |
|---|---|---|
| VIENNA | 31-01-1989 | ROUSSARIAN |